# EUROPEAN PATENT SPECIFICATION

(11) **EP 3 999 363 B1**
(45) Date of publication and mention of the grant of the patent: **27.12.2023**
(21) Application number: 20750986.0
(22) Date of filing: 15.07.2020
(51) Int. Cl.: B60C 23/06, B60C 23/08, H01Q 1/22

(54) **VEHICLE TIRE ASSEMBLY INCLUDING AN INTERNAL INFLATION HEIGHT AND CONTACT PATCH SENSOR USING MILLIMETER WAVELENGTH RADAR**
FAHRZEUGSREIFENVORRICHTUNG ZUR MESSUNG DER REIFENHÖHE UND -AUFSTANDSFLÄCHE DURCH EIN RADAR IM MILLIMETERWELLENBEREICH
DISPOSITIF DE PNEUMATIQUE DE VÉHICULE MESURANT LA AUTEUR ET L'EMPREINTE DU PNEUMATIQUE VIA UN RADAR D'ONDE MILLIMÉTRIQUE

(30) Priority: 15.07.2019 US 201962874326 P
(43) Date of publication of application: 25.05.2022
(73) Proprietor: Firestone Industrial Products Company, LLC, Nashville, TN 37201 (US)
(72) Inventor: NORDMEYER, Daniel L., Mount Juliet, Tennessee 37112 (US)
(74) Representative: Kraus & Weisert Patentanwälte PartGmbB
(86) International application number: PCT/US2020/042039
(87) International publication number: WO 2021/011595

(56) References cited:
- EP-A2- 0 937 615
- EP-A2- 1 661 737
- WO-A1-2015/163885
- WO-A1-2016/109109
- US-A1- 2015 217 607
- US-A1- 2017 254 897

## Description

### BACKGROUND

The subject matter of the present invention broadly relates to the art of vehicle tire assemblies that include internal inflation height and contact patch sensors operative to generate signals, data, information and/or other outputs having a relation to an inflated height of the associated tire assembly and/or having a relation to the contact patch defined between the tread of the associated tire assembly and a roadway or other support surface on which the tire assembly is supported. Such sensors use millimeter wave radar technology of an predetermined frequency and wavelength and/or within a predetermined range of frequencies and wavelengths. Tire assemblies including such millimeter wavelength radar inflation height and contact patch sensors as well vehicle systems including one or more of such tire assemblies are also included.

It will be appreciated that the subject matter of the present invention may be particularly amenable to use in connection with vehicles, including motorized vehicles such as cars, trucks, and buses and also unmotorized vehicles such as trailers or the like, and the subject matter hereof will be discussed in detail with specific reference to such vehicles. However, it is to be specifically understood that application and use of the subject sensors is not intended to be in any way limited to the specific examples disclosed herein, which are merely exemplary.

It is generally known to include one or more sensors inside of a tire body and/or as part of a tire assembly, such as connected to a wheel and located in an air chamber of a pneumatic tire. Such sensors have included optical sensors, ultrasonic sensors, and other non-contact distance sensors. In many cases, such system have been deemed to be suboptimal for a wide variety of different reasons such as low resolution, slow update and/or refresh rates, ineffectiveness due to the conditions inside the tire chamber, and other drawbacks such as the inability to derive the data needed for use in modern vehicle control systems.

One such prior system uses an ultrawideband radar sensor inside of a tire chamber. The sensor uses radar waves to sense the condition of the soil beneath the tire, to sense the tire footprint, and/or to sense deflection of the tire casing. The ultrawideband radar waves are thought to be deficient in terms of the type, quality and speed of the data provided in terms of resolution, refresh rates, electronic interference, and the like. Also, one such prior system uses a slip ring to install the sensor such that it is continuously oriented vertically downward toward the surface on which the tire is rolling, and this slip ring system is not desirable for many applications due to a variety of know deficiencies.

Other known sensors are embedded in the casing of the tire, such as in the tread region or sidewall. These sensors can be effective for certain applications but require the tire, itself, to be manufactured with or modified to include the sensor(s), which increases the cost of the tires and prevents the re-use of sensors that are permanently embedded in the tire casing. These systems typically also lack a source of electrical power and require a fixed radio-frequency interrogator connected to the vehicle body or suspension to energize and activate the sensor. The following document WO 2016/109109 A1 can be cited as prior art.

Still other systems have relied upon placement of sensors external to the tire air chamber, such as on the vehicle suspension or body. Such systems attempt to sense the conditions inside the tire from outside the tire casing, which reduces their effectiveness and limits the type and quality of information provided.

Notwithstanding these conventional tire sensors and others that are known in the art, it is believed that a need exists to address the foregoing and/or other challenges while providing comparable or improved performance, ease of manufacture, reduced cost of manufacture, and/or otherwise advancing the art of tire assemblies and sensors for same.

### BRIEF SUMMARY

One example of a tire assembly in accordance with the subject matter of the present invention can include a tire with a tire body that includes a cylindrical tread region and axially-spaced first and second sidewalls extending radially inward to respective first and second mounting beads that at least partially define a central opening of the tire body. The tire body can include an inner surface, and the cylindrical tread region can include an exterior tread adapted to roll along an associated road surface. The cylindrical tread region together with the first and second sidewalls can at least partially define an annular tire chamber with an open end in communication with the central opening of the tire body. A tire height and contact patch sensor can be at least partially disposed within the annular tire chamber. The sensor can include an electrical power source and a radar source communicatively coupled with the electrical power source. The radar source can be operable to emit millimeter wavelength radar waves into the annular tire chamber toward a target area along the inner surface of the tire body. A radar receptor can be communicatively coupled with the electrical power source and operable to receive millimeter wavelength radar waves reflected off of the target area along the inner surface of the tire body. The radar receptor can also be operable to generate a signal having a relation to the reflected radar waves and/or receipt of the reflected radar waves at the radar receptor, such as in relation to a time of arrival, for example. An antenna can be communicatively coupled with at least the radar receptor and operable to transmit data, signals and/or communications having the relation to the reflected radar waves and/or receipt of the reflected radar waves at the radar receptor to an associated system external to the annular tire chamber. A processor can be communicatively coupled with at least one of the radar source, the radar receptor and the antenna. The processor can be operable to determine a distance between the radar source and the target area based on at least one of: (i) a time of flight required for the radar waves to travel from the radar source to the target area and then to the radar receptor; (ii) a frequency phase shift between the radar waves transmitted by the radar source and the radar waves reflected from the target area and received by the radar receptor.

One example of a vehicle system in accordance with the subject matter of the present invention can include an electronic control system, and at least one tire assembly according the foregoing paragraph in operative communication with the electronic control system.

### BRIEF DESCRIPTION OF THE DRAWINGS

FIG. 1 is a schematic representation of one example of a vehicle including a plurality of tire assemblies each including an inflation height and contact patch sensor in accordance with the subject matter of the present invention.
FIG. 2 is a schematic representation of a second example of a vehicle including a plurality of tire assemblies each including an inflation height and contact patch sensor in accordance with the subject matter of the present invention.
FIG. 3 is a cross-sectional side view of a tire assembly including an inflation height and contact patch sensor in accordance with the subject matter of the present invention.
FIG. 4 is a diagram showing changes tire contact patch in response to variations in tire air pressure and tire load.
FIG. 4A illustrates a two-dimensional image of a tire contact patch constructed by an inflation height and contact patch sensor for a tire assembly in accordance with an embodiment of the subject matter of the present invention.
FIG. 5 is a schematic representation of one example of an inflation height and contact patch sensor for a tire assembly in accordance with the subject matter of the present invention.

### DETAILED DESCRIPTION

Turning now to the drawings, it is to be understood that the showings are for purposes of illustrating examples of the subject matter of the present invention and are not intended to be limiting. Additionally, it will be appreciated that the drawings are not to scale and that portions of certain features and/or elements may be exaggerated for purpose of clarity and ease of understanding.

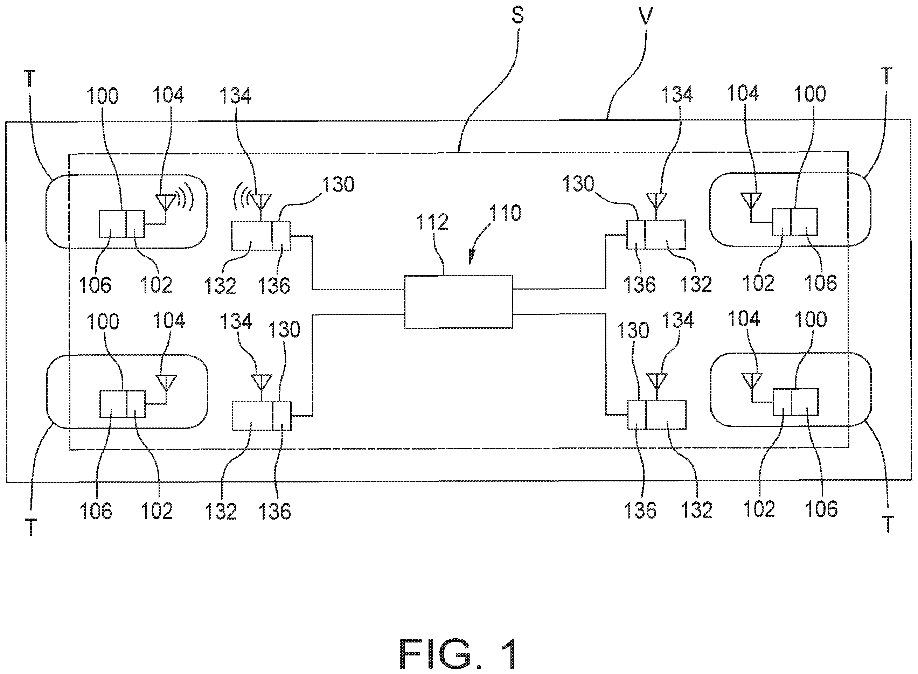

FIG. 1 is a schematic representation of one example of a vehicle **V** including a tire monitoring system **5** for monitoring tire inflation height and contact patch according to the present invention. Vehicle **V** can be a motorized vehicle, a towed or other non-motorized vehicle, or a combination of a motorized vehicle and non-motorized vehicle such as a tractor and semi-trailer vehicle. System **5** includes one or more pneumatic tire assemblies **T** that include an internal inflation height and contact patch sensor module or sensor **100** in accordance with the subject matter of the present invention, as described further below.

System **S** also includes an electronic control system **110** with an electronic control unit (ECU) **112** in operative communication with one or more of sensor modules **100** through respective receiver modules **130.** In the embodiment illustrated in FIG. 1, sensor modules **100** and receiver modules **130** are provided in a 1:1 ratio with respect to each other, with each of receiver modules **130** being located on vehicle **V** in the region of tire assembly **T** with which it is respectively in communication. That is, in the exemplary arrangement shown, each receiver module **130** is located at a respective corner of vehicle **V** where a tire assembly **T** including a sensor module **100** is located. In such an exemplary arrangement, each receiver module **130** is in wireless operative communication with a respective one of sensor modules **100** via radio frequency or another wireless communication link. Receiver modules **130** are in wired (as shown) and/or wireless operative communication with ECU **112** for communication of power and data therebetween. In the embodiment of FIG. 1, sensor modules **100** thus include a sensor transceiver **102** and an antenna **104** connected to sensor transceiver **102** such that the sensor transceiver sends and receives wireless data to and from sensor module **100** (and optionally receives electrical power as described below) via RF signals sent and received using antenna **104.** Sensor modules **100** also include an electronic controller or electronic processor **106,** such as a microprocessor or the like, for controlling sensor **100** and for processing radar data as described herein. For example, as described in further detail below, processors **106** can derive information concerning the inflation height and contact patch of tire assembly **T** with which it is associated and communicate this information to ECU **112** for further processing and/or for use as control input to another system of vehicle **V,** such as, without limitation, warning lights or other warning systems, tire inflation/deflation systems, and/or any other systems and/or processes.

Receiver modules **130** include a receiver module transceiver **132** and an antenna **134** connected to transceiver **132** for bi-directional wireless data communication with (and optional power transmission to) a respectively associated sensor module **100** using wireless RF signals. In the embodiment shown in FIG. 1, receiver modules **130** also include a local electronic receiver processor **136,** such as microprocessor or the like, for performing local data processing operations on sensor data received from the sensor module **100** with which a given receiver processor **136** is in communication. As such, receiver processor **136** of each receiver module **130** can use the data received from its respectively associated sensor module **100** to derive information concerning the inflation height and contact patch of tire assembly **T** and communicate this information to ECU **112** for further processing and/or for use as control input to another system of the vehicle **V,** such as, without limitation, a warning light or other warning system, a tire inflation/deflation system, and/or any other systems and/or processes. Alternatively, receiver processors **136** can be replaced by a single receiver processor provided by or as part of ECU **112** or other parts of electronic control system **110.** ECU(s) **112,** sensor processors **106,** and receiver processors **136** can each be provided by any suitable type, kind and/or configuration, such as a microprocessor-based controller or other electronic controller, which can be separate or integrated into a single processor or module.

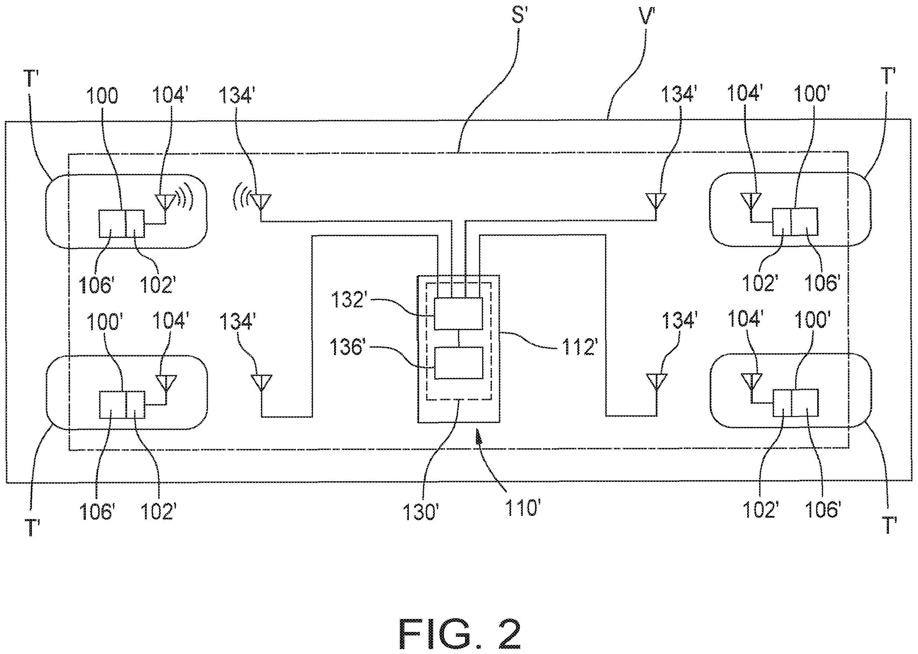

FIG. 2 is similar to FIG. 1 but shows vehicle **V** including an alternate tire monitoring system **S'** that is identical to tire monitoring system **S** of FIG. 1 except as otherwise shown and/or described herein. Like components relative to the system **5** are identified with like reference characters including a primed (') designation, and the description of some of these components is not repeated here. In the alternate arrangement illustrated in FIG. 2, each sensor module **100'** is in wireless communication with a single receiver module **130'** that is provided as part of or otherwise operatively connected to ECU **112'.** Receiver module **130'** is in wireless operative communication with each sensor module **100'** via radio frequency or other wireless communication link. Receiver module **130'** includes a wireless transceiver **132'** and at least one antenna **134'** connected to transceiver **132'** for bi-directional wireless RF data communication between each sensor module **100'** and receiver module **130'.** As shown in the present example, receiver module **130'** includes multiple antennae **134',** with each antenna dedicated to and preferably located in the region of one of tire sensor modules **100',** although receiver module **130'** alternatively uses only a single antenna **134'** to communicate with all of tire assembly sensor modules **100'.** Receiver module **130'** includes an electronic receiver processor **136',** such as microprocessor or the like, for performing data processing operations on sensor data received from sensor modules **100'** with which it is in communication. As such, receiver processor **136'** can use the data received from sensor modules **100'** to derive information concerning the inflation height and contact patch of each tire assembly **T'** and communicate this information to ECU **112'** for further processing and/or for use as control input to another system, device, or process of vehicle **V',** such as a warning lights or other warning systems, tire inflation/deflation systems, and/or any other systems and/or processes. Alternatively, receiver processor **136'** can be provided by or as part of ECU **112'** or another part of electronic control system **110'.**

In accordance with the subject matter of the present invention, each internal tire height and contact patch sensor **100** generates and outputs data, signals, information and/or other communications having a relation to the inflated height of the respective tire assembly with which it is operatively associated, and also optionally generates and outputs data, signals, information and/or other communications having a relation to the dimensions (e.g., size and shape) of a contact patch defined between the tread of tire assembly **T** and the roadway or other surface on which the tire assembly is supported for rolling thereon. Each tire inflation height and contact patch sensor **100** also can generate and output data, signals, information and/or other communications having a relation to the deflection of the sidewalls of a tire portion of tire assemblies **T,** a relation to an angle or change of angle between a target portion of the tire and sensor **100,** and/or having a relation to the velocity and/or acceleration at which a portion of tire **TR** is moving relative to sensor **S.**

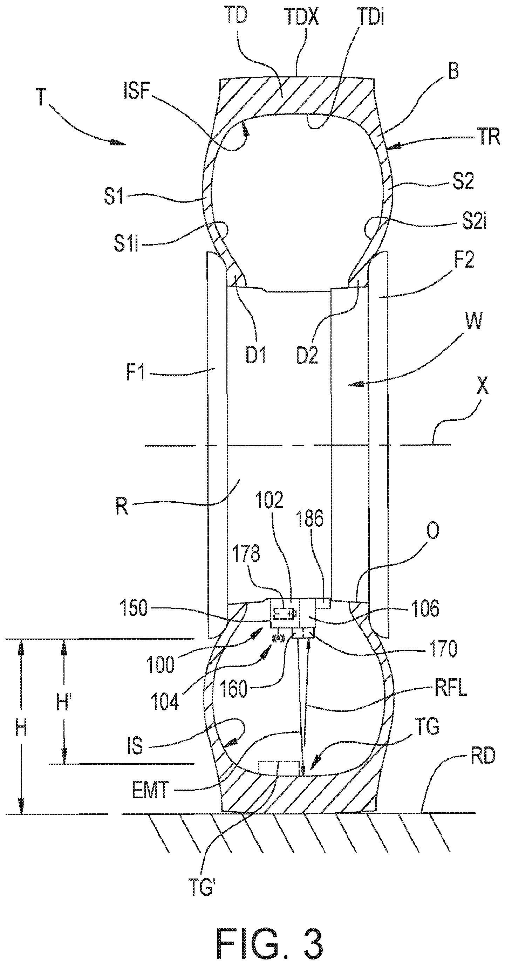

FIG. 3 is a cross-sectional side view of one example of tire assembly **T** including an inflation height and contact patch sensor in accordance with the subject matter of the present invention. Tire assembly **T** includes a one-piece or multi-piece wheel **W** that rotates about a rolling axis or axis of rotation **X.** Wheel **W** includes a cylindrical rim **R** defined concentrically about rolling axis **X** and on which an elastomeric pneumatically-inflated tire **TR** is operatively mounted. Rim **R** includes first and second circumferentially extending circular mounting flanges **F1** and **F2** that are axially spaced-apart along the rolling axis. Tire **TR** can include a reinforced elastomeric tire carcass or tire body **B** with a cylindrical tread region **TD** including an exterior tread **TDX** adapted to roll along a roadway or other associated support surface **RD.** Tire body **B** includes a central mounting opening **O** defined by first and second circular beads **D1** and **D2,** which are connected to opposite inner and outer sides of tread region **TD** by way of first and second radially and circumferentially extending sidewalls **S1** and **S2,** respectively. First and second beads **D1** and **D2** seat on the rim, respectively on or against first and second mounting flanges **F1** and **F2,** and sealingly engage the flanges in an fluid-tight manner such that a hollow tire chamber **C** is defined between rim **R** and body **B** of tire **TR.** Tire body **B** includes an inner surface **ISF** that at least partially defines tire chamber **C.** Tire body inner surface **ISF** includes and is defined by first and second sidewall inner surfaces **S1i** and **S2i** of first and second sidewalls **S1** and **S2,** respectively, and a tread region inner surface **TDi** that extends between and interconnects the first and second sidewall inner surfaces.

In a preferred arrangement, in accordance with the subject matter of the present invention, tire height and contact patch sensors **100** are located inside tire chamber **C** of tire assembly **T** and can be of a type, kind and/or construction that utilizes a radio wave (radar) transmitter operable to direct millimeter wavelength radar waves of a frequency greater than 120 gigahertz (GHz) and a wavelength of less than or equal to 2.5 millimeters (mm) toward a target surface inside tire chamber **C.** In one embodiment, sensor devices **100** transmit radar waves of a frequency in the range of 120 to 240 gigahertz (GHz), inclusively, corresponding to a wavelength in the range of 2.5 to 1.25 millimeters (mm), inclusively.

Sensing devices **100** further include a radar receptor that receives radar waves reflected off of the target surface and generates signals, data, information and/or communications that vary according the received reflected radar waves. Sensor devices **100** include a sensor processor **106** that utilizes the signals, data, information and/or communications generated by the radar receptor to derive a distance (sometimes referred to as "height" or "displacement") between the radar source and the target surface which corresponds to a height or inflation height **H** of tire assembly **T** (or all of the same can be derived by each receiver processor **136**).

Sensor processor **106** or receiver processor **136** optionally also derives the relative velocity and/or acceleration between the radar source and the target surface. Sensor processor **106** or receiver processor **136** also optionally derives an angle or change of angle between the radar source and the target surface. Processors **106** and/or **136** (or ECU **112**) derive these and other operational data and information based upon at least one of: (i) the time of flight for a radar wave to travel from the radar source to the target and then to the radar receptor; (ii) a frequency shift (or "phase shift") between the radar waves transmitted by the radar source and the radar waves reflected from the target surface and received by the radar receptor using a pulsed Doppler method or a continuous wave frequency modulation (CWFM) method; (iii) angle of arrival or change in angle of arrival of radar waves reflected from the target surface and received by the radar receptor. The distance derived by sensor processor **106** and/or receiver processor **136** has a relationship to the "inflation height" **H** (FIG. 3) of tire assembly **T,** which can be defined as the minimum radial distance between rim **R** and roadway **RD** or other surface on which tire assembly **T** is operably supported at any given time based upon the air pressure in chamber **C** and load carried by tire **TR.**

Tire assembly **T** is shown in FIG. 3 as including a tire inflation height and contact patch sensor **100** in accordance with the subject matter of the present invention. It will be appreciated that sensor **100** can be operatively supported within tire chamber **C** in any suitable manner, and can include one or more components supported on or along rim **R** or other parts of wheel **W** and/or along tire **TR.** For example, in the arrangement shown in FIG. 3, sensor **100** is shown as being disposed within tire chamber **C** and supported along an outside diameter surface of rim **R** that is oriented toward inner surface **ISF** of tire body **B.** Sensor **100** includes a sensor housing **150** that is secured in a suitable manner to the rim **R.** In the illustrated embodiment, the sensor housing **150** is immovably fixed to rim **R** and rotates therewith. Alternatively, sensor housing **150** can be movably connected to the rim using a slip ring or other connection that allows relative angular movement between sensor housing **150** and rim **R** about axis of rotation **X** such that sensor housing **150** does not rotate with rim **R.** In this manner, sensor **100** can be continuously operatively directed toward roadway **RD.** Sensor **100** includes a millimeter wavelength radar source **160** and a millimeter wavelength radar receptor **170.** In a preferred arrangement, such as is shown in FIG. 3, radar source **160** and radar receptor **170** are operatively disposed on a common component, such as rim **R,** and can be located in proximal relation to one another as part of the same component in a single housing (e.g., housing **150**), as shown herein, or as part of separate adjacent components. In one embodiment, sensor housing **150** is connected to rim **R** by an airtight threaded connection that is accessible from a location that is external to tire chamber **C** (e.g., along an exposed external surface of rim **R** outside tire chamber **C**) that allows sensor **100** to project through rim **R** into tire chamber **C** and also allows sensor **100** to be removed and replaced or serviced without requiring removal of tire **TR** from rim **R.** However, it will be appreciated that other configurations and/or arrangements could alternately be used without departing from the subject matter of the present invention.

Inflation height and contact patch sensor **100** can include a self-contained, rechargeable electrical power source **178** (e.g., one or more batteries) and can also include radio frequency (RF) antenna **104** suitable for wireless reception and/or transmission of signals, data and/or information for communication and/or other purposes. Antenna **104** (or, a second antenna can be included and) can be connected to an optional radio frequency energy harvesting circuit **182** (FIG. 6) used to harvest electrical energy from the received RF energy and provide wireless electrical power to the sensor for direct use and/or to a charging circuit **184,** such as for recharging self-contained, rechargeable power source **178.** In another embodiment, sensor **100** includes or is connected to an optional vibration energy harvesting device **186** (FIG. 6) connected to rim **R** (as shown), tire body **B,** or elsewhere in tire chamber **C,** tire assembly **T,** or vehicle **V.** Vibration energy harvesting device **186** can include any known system for converting kinetic energy in the form of vibration and other movement of tire assembly **T** into electrical energy for powering sensor **100** directly and/or for charging power source **178.** Suitable examples of a vibration energy harvesting device **186** for use according to the present disclosure include a piezo-electric or similar electromechanical transducers that convert mechanical energy from movement into electrical energy and/or electromagnetic energy generators that generate electrical power via electromagnetic induction based upon relative movement between a coil and a magnetic field.

During use, in accordance with the subject matter of the present invention, inflation height and contact patch sensors **100** are shown in FIG. 3 as being operable emit to millimeter wave radar waves having a frequency greater than or equal to 120 gigahertz (GHz) and a wavelength of less than or equal to 2.5 millimeters (mm) from radar source **160** in a direction toward a target **TG** located on and/or provided as part of the tire body inner surface **ISF,** such as is represented by arrow **EMT.** In one embodiment, sensor devices **100** transmit radar waves of a frequency inclusively in the range of 120 to 240 gigahertz (GHz), corresponding to a wavelength inclusively in the range of 2.5 to 1.25 millimeters (mm). Target **TG** can be provided by any part of tire assembly **T** internal to tire chamber **C** that is generally spaced-apart from and moveable with respect to radar source **160,** such as any part of tire body **B** and inner surface **ISF** thereof. Emitted radar waves **EMT** are incident upon target **TG** and at least some of the emitted radar waves are then reflected off of the target **TG** in a direction back toward radar receptor **170,** as is represented by arrows **RFL.** The angle defined between radar receptor **170** (which can include an array of multiple receiver antennae) and received reflected radar waves **RFL** is referred to as the angle of arrival. Inflation height and contact patch sensor **100** in accordance with the subject matter of the present invention will operate properly while reflecting radar waves off any part of inner elastomeric surface **ISF** or other part of tire body **B,** without requiring the use of any specialized reflector or coating. In some cases, however, it may be desirable to provide a separate, specialized reflective target **TG'** (partially shown in broken lines) connected to inner surface **ISF** of tire body **B** or embedded in tire body **B,** such as a coating, film, or other layer or structure, having predetermined reflective properties, such as may be useful to provide a particular level of performance or robustness of operation. In one embodiment, added target **TG'** extends 360 degrees along inner surface **ISF** of tire body **B** about axis of rotation **X** such that part of added target **TG'** will always be aligned with sensor **100** regardless of the angular mounting location of tire **TR** on rim **R.**

Sensor **100,** or a system or component operatively associated with the sensor, can be operable to determine time of flight of the radar waves traveling at the speed of light (i.e., 299,792,458 meters per second (m/s) in air) from radar source **160,** to target **TG** and then to radar receptor **170.** It will be appreciated that the roundtrip distance traveled by the radar waves will have a relation to the time of flight. Thus, by determining the time of flight of the radar waves, a distance **H'** between radar source **160** and target **TG** can be determined by processors **106** and/or **136** or by ECU **112** or another processor. When the target **TG** is provided as tread region inner surface **TDi,** this distance **H'** between radar source **160** and radar receptor **170** is directly related to and varies directly with inflation height **H** of tire assembly **T** such that distance **H'** (and inflation height **H**) decreases as air pressure in tire chamber **C** is reduced (until rim **R** contacts road surface **RD**) and distance **H'** (and inflation height **H**) increases to a maximum value when tire **TR** is fully inflated (until sidewalls **S1** and **S2** are extended to a maximum height). As noted above, "inflation height" **H** of tire assembly **T** is defined as the minimum distance between rim **R** and roadway **RD** or other surface on which tire assembly **T** is operably supported. As such, sensor processor **106** and/or receiver processor **136** and/or ECU **112** and/or other processors can determine and/or assess changes in inflation height **H** based upon distance **H'** measured by sensor **100** and/or changes in distance **H'** measured by sensor **100.**

Additionally, or in the alternative, inflation height and contact patch sensor 100, or a system or component operatively associated therewith, can be operable to determine a frequency shift or phase shift between radar waves **EMT** transmitted by radar source **160** and radar waves **RFL** reflected from target **TG** and received by radar receptor **170** using pulsed Doppler radar pulses or continuous wave frequency modulation (CWFM) of continuously transmitted radar waves. In either case, it will be appreciated that, based upon the Doppler effect, the frequency shift exhibited by the reflected radar waves **RFL** relative to transmitted radar waves **EMT** will have a relation to relative movement between source **160** and target **TG.** Thus, by determining the time of flight of the radar waves and/or by determining the phase shift of the radar waves, sensor **100,** or a system or component operatively associated with sensor **100** (such as processor **106,** processor **136,** and/or ECU **112**), can then determine distance **H'** between source **160** and target **TG** and can also determine the velocity and acceleration of target **TG** relative to radar source **160.** Sensor **100** can be operative to update such measurements rapidly to assess changes over time. Furthermore, sensor **100** can be operative to monitor and assess the angle of arrival or changes in the angle of arrival of reflected radar waves **RFL** as received by receptor **170.** The angle of arrival or changes in the angle of arrival allow sensor processor **106** or receiver processor **136** to determine the angle or changes in the angle between tire inner surface **ISF** (e.g., as may be at least partially defined by **TDi,S1i,** and/or **S2i**) or another target **TG** and radar receptor **170.** Accordingly, inflation height and contact patch sensors **100,** or a system or component operatively associated therewith, are operable to determine a distance between, the angle between, velocity difference between, and/or acceleration between radar wave source **160** and target **TG.**

Additionally, or in the alternative, inflation height and contact patch sensors **100,** or a system or component operatively associated therewith, can be operable to determine a distance between, the angle between, velocity difference between, and/or acceleration between radar source **160** and an alternative target located in tire chamber **C** such as any portion of one or both sidewalls **S1** and **S2** (e.g., such as sidewall inner surfaces **S1i** and/or **S2i**) and/or can be operable to determine a maximum distance defined between first and second sidewalls **S1** and **S2** across tire chamber **C** to assess inflation height **H** or pneumatic pressure contained in tire chamber **C.**

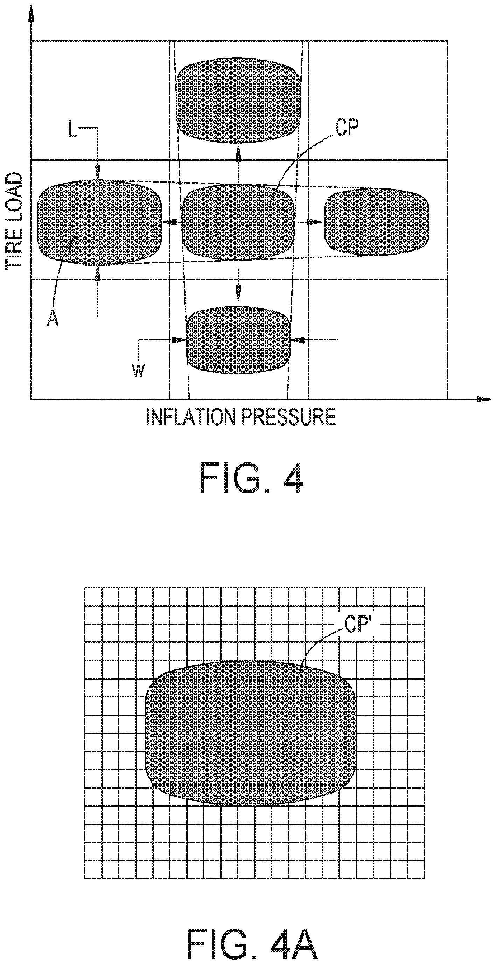

With reference also to FIG. 4, inflation height and contact patch sensors **100,** or a system or component operatively associated therewith, are optionally further operable to sense the size of a tire contact patch **CP** existing between external tread **TDX** of tire **TR** and roadway **RD** or other support surface on which tire **TR** is supported for rolling movement. FIG. 4 provides a diagram that shows changes in tire contact patch **CP** size (length (**L**) x width (**W**)) in response to variations in tire air pressure and tire load. In particular, as tire inflation pressure increases, length **L** and width **W** of contact patch **CP** (and, thus, its overall size/area **A** as estimated by its length **L** multiplied by its width **W** or as otherwise determined) decrease. Conversely, as tire load increases, length **L and** width **W** of contact patch **CP** (and, thus, its overall size/area **A**) increase. According to one aspect of the present disclosure, for at least one and preferably for each of tire assemblies **T** of the vehicle, sensors **100** sense at least one of: (i) length **L** of contact patch **CP;** (ii) width **W** of contact patch **CP**; (iii) size/area **A** of contact patch **CP**. In one example, sensor processor **106,** receiver processor **136** and/or ECU **112** uses received reflected radar waves **RFL** to construct a two-dimensional image **CP'** (FIG. 4A) representing contact patch **CP** based upon the fact that contact patch **CP,** and the corresponding portion of tread inner surface **TDi** aligned therewith and adjacent thereto, is flat or otherwise non-cylindrical as compared to the portions of tread **TDX** and tread inner surface **TDi** not in contact with road **RD** or other support surface. Furthermore, the presence of roadway **RD** adjacent the contact patch affects reflection **RFL** of the radar waves. Thus, radar waves **RFL** reflected from the portion of tread inner surface **TDi** aligned with and adjacent contact patch **CP** will be distinguishable by sensors **100** from the radar waves reflected from tread inner surface **TDi** but not aligned with and adjacent contact patch **CP**. Length **L,** width **W,** and/or overall area **A** of contact patch **CP** can be derived directly and/or based upon image contact patch **CP'.** Alternatively or additionally, sensor processor **106,** receiver processor **136,** and/or ECU **112** uses pattern matching and other image processing methods to compare constructed two-dimensional contact patch image **CP'** with stored contact patch images and/or other data that relate respectively to and indicate over-inflation, under-inflation, or over-loading fault conditions and processors **106, 136** and/or **112** determine if contact patch image **CP'** (corresponding to and representing the actual contact patch **CP** sensed by sensors **100**) indicates the presence of any such fault condition by way of an image match.

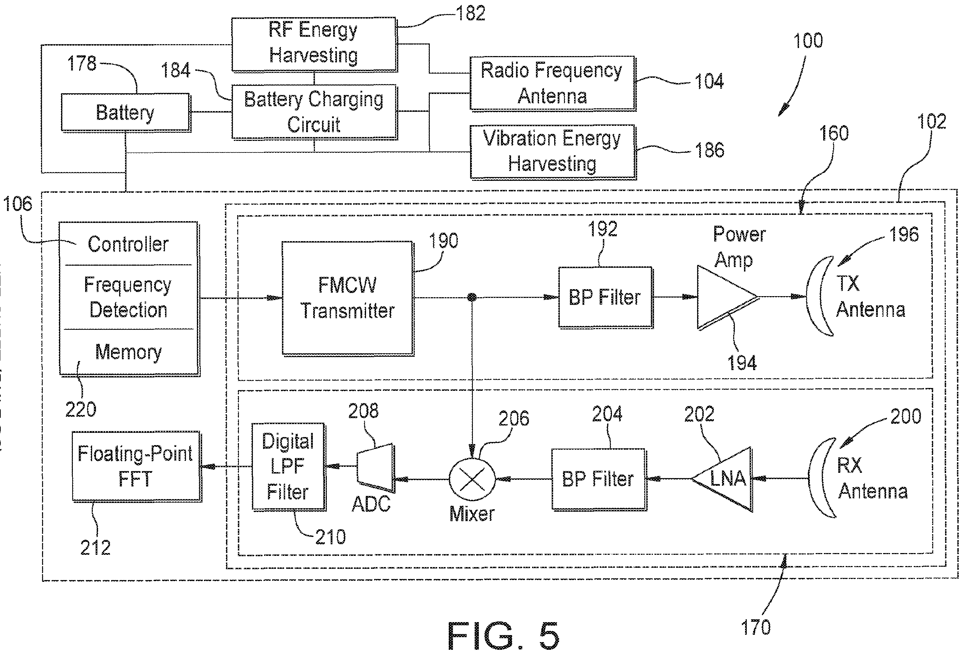

FIG. 5 schematically illustrates one example of an inflation height and contact patch sensor **100** in accordance with the subject matter of the present invention. As discussed above, sensors **100** are preferably of a type, kind and/or construction that utilizes millimeter wave radar waves having a frequency (f) inclusively in the range of 120 GHz to 240 GHz (120 GHz ≤ f ≤ 240 GHz) which corresponds to a wavelength (λ) inclusively in the range of 2.5mm to 1.25mm (2.5mm ≥ X ≥ 1.25mm) and that utilizes either a pulsed Doppler radar method or a continuous wave frequency modulation method to generate data, signals, information and/or other communications having a relation to a distance, relative velocity, acceleration, and/or angle or change in angle between receiver **170** and target **TG.**

Sensors **100** include millimeter wave radar source **160** that is operable to emit radar waves through a transmit (TX) antenna **196** toward target surface, such as target **TG** or any other surface. In the illustrated example, radar source **160** includes a frequency modulated continuous wave transmitter **190** operably connected to a band pass filter **192** that passes signals of the frequency generated by transmitter **190** and a power amplifier **194** which, in turn, outputs emitted radar waves **EMT** through transmit antenna **196** toward target **TG.** Sensors **100** also includes a radar wave receptor **170** that is operable to sense, receive, or otherwise detect returned radar waves **RFL** reflected from the target through a receive (RX) antenna **200** and the angle of arrival of reflected radar waves **RFL** at receive (RX) antenna **200** which can include an array of multiple antennae. Receive antenna **200** is operably connected to a low noise amplifier **202** which outputs the amplified signal to a band pass filter **204.**

An RF mixer **206** is operably connected to and receives input signals from band pass filter **204** and also the originally generated FMCW signal from frequency modulated continuous wave transmitter **190.** Mixer **206** outputs a signal that represents the phase shift or phase difference between originally-transmitted radar FMCW signal **EMT** and received reflected signal **RFL.** RF mixer **206** is operably connected to and outputs the phase difference signal to an analog-to-digital converter (ADC) **208** which outputs the digital signal to a low pass filter **210** for conditioning the signal to remove undesired high-frequency noise. Low-pass filter **210** is operably connected to a Fast Fourier Transform (FFT) module **212** that performs a Fast Fourier Transform on the signal to obtain the desired frequency phase-shift data which are input to microprocessor **106** or another electronic controller, which can alternatively be receiver processor **136** of receiver module **130,** ECU **112,** and/or another microprocessor or other controller provided as part of system **S** and/or vehicle **V.** Processor **106** (or another electronic controller) derives height **H'** and relative velocity and/or acceleration between transmit antenna **196** and target **TG.** Processors **106** and **136** and ECU **112** can be of any suitable type, kind and/or configuration, such as a microprocessor, for example, for processing data, executing software routines/programs, and other functions relating to at least the determination of the time of flight, frequency phase shift, and angle of arrival or changes in the angle of arrival for reflected radar waves **RFL** received by RX antenna **200.** Additionally, sensors **100** can be communicatively coupled with other systems and/or components (e.g., controller **112** in FIG. 1) in any suitable wired or wireless manner.

Additionally, processor **106** or other part of sensors **100** can include a non-transitory storage device or memory **220,** which can be of any suitable type, kind and/or configuration that can be used to store data, values, settings, parameters, inputs, software, algorithms, routines, programs and/or other information or content for any associated use or function, such as used in association with the determination of the time of flight and frequency phase shift occurring between the transmitted radar waves and the reflected radar waves received via RX antenna **200** and/or for determining the angle of arrival of reflected radar waves RFL at RX antenna **200.** Non-transitory memory **220** is operably communicatively coupled with processor **106** such that the processor can access the memory to retrieve and execute any one or more software programs and/or routines. Additionally, data, values, settings, parameters, inputs, software, algorithms, routines, programs, stored contact patch images for pattern matching, and/or other information or content can also be retained within memory **220** for retrieval by processor **106.** It will be appreciated that such software routines can be individually executable routines or portions of a software program, such as an operating system, for example. Additionally, it will be appreciated that the controller, processing device and/or memory, can take any suitable form, configuration and/or arrangement, and that the embodiments shown and described herein are merely exemplary. Furthermore, it is to be understood, however, that the modules described above in detail can be implemented in any suitable manner, including, without limitation, software implementations, hardware implementations or any combination thereof.

Using such an arrangement, tire inflation height and contact patch sensors **100** can function as an extremely accurate sensor that is capable of providing signals, data and/or other information regarding tire inflation height **H,** velocity and acceleration of a target **TG** portion of tire body **B** relative to sensor **100,** tire contact patch **CP** size & shape, and the angle or changes in the angle between target **TG** and sensor **100.** This information can be used by other vehicle systems such as warning systems, ride control or handling systems, vibration control and active damping systems, and system that utilize road surface information such as active suspension systems or active engine mounts. Sensor **100** disclosed herein enable an accuracy of +/- 1 millimeter increments to be achieved for distance/height measurements, with both measurements updated with new measurements at an update rate of less than 1 millisecond. In one embodiment, the displacement and velocity measurements are updated with new measurements every 700 microseconds.

## Claims

1. A tire assembly (T; T') comprising:
a rim (R) adapted for displacement about an axis of rotation (X), said rim (R) including a rim wall;
a tire (TR) including a tire body (B) with a cylindrical tread region (TD) and axially-spaced first and second sidewalls (S1, S2) extending radially inward to respective first and second mounting beads (D1, D2) that at least partially define a central opening (O) of said tire body (B), said tire body (B) including an inner surface (ISF), said cylindrical tread region (TD) including an exterior tread (TDX) adapted to roll along an associated road surface (RD), and said cylindrical tread region (TD) together with said first and second sidewalls (S1, S2) at least partially defining an annular tire chamber (C) with an open end in communication with said central opening (O) of said tire body (B), said tire (B) mounted on said rim (R) such that at least a portion of said inner surface (ISF) of said tire body (B) faces radially inward toward a portion of said rim wall;
a tire height and contact patch sensor (100; 100') supported along said portion of said rim wall and at least partially disposed within said annular tire chamber (C), said sensor (100; 100') including:
an electrical power source (178);
a radar source (160) communicatively coupled with said electrical power source (178) and operable to emit millimeter wavelength radar waves (EMT) into said annular tire chamber (C) from along said portion of said rim wall toward a target area (TG) along said inner surface (ISF) of said tire body (B);
a radar receptor (170) communicatively coupled with said electrical power source (178) and operable to receive millimeter wavelength radar waves (RFL) reflected off of said target area (TG) along said inner surface (ISF) of said tire body (B) and generate a signal having a relation to said reflected radar waves (RFL) and/or receipt of said reflected radar waves (RFL); and,
an antenna (104; 104') communicatively coupled with at least said radar receptor (170) and operable to transmit data, signals and/or communications having said relation to said reflected radar waves (RFL) and/or receipt of said reflected radar waves (RFL) to an associated system external to said annular tire chamber (C); and,
a processor (106; 106'; 136; 136'; 112; 112') communicatively coupled with at least one of said radar source (160), said radar receptor (170) and said antenna (104; 104'), said processor (106; 106'; 136; 136'; 112; 112') operable to determine a distance between said radar source (160) and said target area (TG) based on at least one of: (i) a time of flight required for said radar waves to travel from said radar source (160) to said target area (TG) and then to said radar receptor (170); (ii) a frequency phase shift between said radar waves (EMT) transmitted by said radar source (160) and said radar waves (RFL) reflected from said target area (TG) and received by said radar receptor (170).

2. A tire assembly (T; T') according to claim 1, wherein said processor (106; 106'; 136; 136'; 112; 112') is further operable to determine at least one of velocity and acceleration of relative movement between said radar source (160) and said target area (TG) based upon a frequency phase shift between said radar waves (EMT) transmitted by said radar source (160) and said radar waves (RFL) reflected from said target area (TG) and received by said radar receptor (170).

3. A tire assembly (T; T') according to either one of claims 1 and 2, wherein said radar source (160) is operative to emit at least one of: (i) individual pulses of radar waves; (ii) a continuous radar wave that is frequency modulated.

4. A tire assembly (T; T') according to any one of claims 1-3, wherein said radar source (160) emits said millimeter wave radar waves (EMT) with a frequency greater than or equal to 120 gigahertz (GHz) and a wavelength of less than or equal to 2.5 millimeters (mm) toward said target area.

5. A tire assembly (T; T') according to any one of claims 1-4, wherein said processor (106; 106'; 136; 136'; 112; 112') determines said distance at a resolution of less than or equal to one (1) millimeter increments.

6. A tire assembly (T; T') according to any one of claims 1-5, wherein said processor (106; 106'; 136; 136'; 112; 112') determines said distance repeatedly at intervals of less than or equal to one (1) millisecond.

7. A tire assembly (T; T') according to any one of claims 1-6 further comprising a vibration energy harvesting device (186) operable to convert kinetic energy from movement of said tire assembly (T; T') into electrical energy, said vibration energy harvesting device (186) communicatively coupled with said radar source (160) and operable to provide electrical power thereto.

8. A tire assembly (T; T') according to claim 7, wherein said electrical power source (178) is rechargeable and said vibration energy harvesting device (186) is operably connected to said electrical power source (178) to supply recharging electrical power thereto.

9. A tire assembly (T; T') according to any one of claims 1-8, wherein said electrical power source (178) of said sensor (100; 100') includes a radio frequency energy harvesting circuit (182) for harvesting electrical energy from radio frequency waves received by said antenna (104; 104').

10. A tire assembly (T; T') according to claim 9, wherein said electrical power source (178) is rechargeable and said radio frequency energy harvesting circuit (182) is operably connected to said electrical power source (178) to supply recharging electrical energy thereto.

11. A tire assembly (T; T') according to any one of claims 1-10, wherein said processor (106; 106'; 136; 136'; 112; 112') is operable to determine an angle between said target area (TG) and said radar receptor (170) based upon an angle of arrival at which said radar waves (RFL) reflected from said target area (TG) are received at said radar receptor (170).

12. A tire assembly (T; T') according to any one of claims 1-11, wherein said processor (106; 106') at least partially disposed within said annular tire chamber (C), and said sensor (100; 100') includes said processor (106; 106').

13. A tire assembly (T; T') according to any one of claims 1-12, wherein said processor (136; 136'; 112; 112') is external to said annular tire chamber (C).

14. A tire assembly (T; T') according to any one of claims 1-13 wherein said processor (106; 106'; 136; 136'; 112; 112') is further operable to construct a two-dimensional image (CP') representing a contact patch (CP) of said tire (TR) and derive a length (L), a width (W) and/or an overall area (A) of said contact patch (CP) from radar waves (RFL) of said tire (TR) within said target area (TG).

15. A tire assembly (T;T') according to any one of claims 1-13, wherein said processor (106; 106'; 136; 136'; 112; 112') is further operable to directly derive a length (L), a width (W) and/or an overall area (A) of a contact patch (CP) from radar waves (RFL) of said tire (TR) within said target area (TG).

## Patentansprüche

1. Reifenanordnung (T; T'), umfassend:
eine Felge (R), die zum Verschieben um eine Drehachse (X) angepasst ist, wobei die Felge (R) eine Felgenwand einschließt;
einen Reifen (TR), einschließlich eines Reifenkörpers (B) mit einem zylindrischen Laufflächenbereich (TD) und einer axial beabstandeten ersten und zweiten Seitenwand (S1, S2), die sich radial nach innen zu einem jeweiligen ersten und zweiten Befestigungswulst (D1, D2) erstrecken, die mindestens teilweise eine zentrale Öffnung (O) des Reifenkörpers (B) definieren, wobei der Reifenkörper (B) eine innere Oberfläche (ISF) einschließt, wobei der zylindrische Laufflächenbereich (TD) eine äußere Lauffläche (TDX) einschließt, die angepasst ist, um entlang einer zugeordneten Straßenoberfläche (RD) zu rollen, und der zylindrische Laufflächenbereich (TD) zusammen mit der ersten und der zweiten Seitenwand (S1, S2) mindestens teilweise einen ringförmigen Reifenhohlraum (C) mit einem offenen Ende in Kommunikation mit der zentralen Öffnung (O) des Reifenkörpers (B) definiert, wobei der Reifen (B) auf der Felge (R) derart befestigt ist, dass mindestens ein Abschnitt der inneren Oberfläche (ISF) des Reifenkörpers (B) radial nach innen zu einem Abschnitt der Felgenwand hin zugewandt ist;
einen Reifenhöhen- und Reifenaufstandsflächensensor (100; 100'), der entlang des Abschnitts der Felgenwand getragen wird und mindestens teilweise innerhalb des ringförmigen Reifenhohlraums (C) eingerichtet ist, wobei der Sensor (100; 100') einschließt:
eine elektrische Leistungsquelle (178);
eine Radarquelle (160), die mit der elektrischen Leistungsquelle (178) kommunikativ gekoppelt ist und betreibbar ist, um Radarwellen mit Millimeterwellenlänge (EMT) in den ringförmigen Reifenhohlraum (C) von entlang des Abschnitts der Felgenwand zu einer Zielregion (TG) hin entlang der inneren Oberfläche (ISF) des Reifenkörpers (B) zu emittieren;
einen Radarempfänger (170), der mit der elektrischen Leistungsquelle (178) kommunikativ gekoppelt ist und betreibbar ist, um Radarwellen mit Millimeterwellenlänge (RFL) zu empfangen, die von der Zielregion (TG) entlang der inneren Oberfläche (ISF) des Reifenkörpers (B) reflektiert werden, und ein Signal erzeugen, das eine Beziehung zu den reflektierten Radarwellen (RFL) und/oder den Empfang der reflektierten Radarwellen (RFL) aufweist; und
eine Antenne (104; 104'), die mit mindestens dem Radarempfänger (170) kommunikativ gekoppelt und betriebsfähig ist, um Daten, Signale und/oder Kommunikationen zu übertragen, die die Beziehung zu den reflektierten Radarwellen (RFL) und/oder den Empfang der reflektierten Radarwellen (RFL) an einem zugeordneten System außerhalb des ringförmigen Reifenhohlraums (C) aufweisen; und
einen Prozessor (106; 106'; 136; 136'; 112; 112'), der mit mindestens einem von der Radarquelle (160), dem Radarempfänger (170) und der Antenne (104; 104') kommunikativ gekoppelt ist, wobei der Prozessor (106; 106'; 136; 136'; 112; 112') betriebsfähig ist, um einen Abstand zwischen der Radarquelle (160) und der Zielregion (TG) zu bestimmen, basierend auf mindestens einem von: (i) einer Flugzeit, die für die Radarwellen erforderlich ist, um sich von der Radarquelle (160) zu der Zielregion (TG) und dann zu dem Radarempfänger (170) zu bewegen; (ii) einer Frequenzphasenverschiebung zwischen den Radarwellen (EMT), die durch die Radarquelle (160) übertragen werden, und der Radarwellen (RFL), die von der Zielregion (TG) reflektiert und durch den Radarempfänger (170) empfangen werden.

2. Reifenanordnung (T; T') nach Anspruch 1, wobei der Prozessor (106; 106'; 136; 136'; 112; 112') ferner betriebsfähig ist, um mindestens eines von einer Geschwindigkeit und einer Beschleunigung der relativen Bewegung zwischen der Radarquelle (160) und der Zielregion (TG) basierend auf einer Frequenzphasenverschiebung zwischen den Radarwellen (EMT), die durch die Radarquelle (160) übertragen werden, und den Radarwellen (RFL), die von der Zielregion (TG) reflektiert und durch den Radarempfänger (170) empfangen werden, zu bestimmen.

3. Reifenanordnung (T; T') nach einem der Ansprüche 1 und 2, wobei die Radarquelle (160) betriebsfähig ist, um mindestens eines von Folgendem zu emittieren: (i) individuelle Impulse von Radarwellen; (ii) eine kontinuierliche Radarwelle, die frequenzmoduliert ist.

4. Reifenanordnung (T; T') nach einem der Ansprüche 1 bis 3, wobei die Radarquelle (160) die Radarwellen (EMT) mit Millimeterwellenlänge mit einer Frequenz von größer als oder gleich 120 Gigahertz (GHz) und einer Wellenlänge von kleiner als oder gleich 2,5 Millimeter (mm) zu der Zielregion hin emittiert.

5. Reifenanordnung (T; T') nach einem der Ansprüche 1 bis 4, wobei der Prozessor (106; 106'; 136; 136'; 112; 112') den Abstand bei einer Auflösung von kleiner als oder gleich einem (1) Millimeterinkrement bestimmt.

6. Reifenanordnung (T; T') nach einem der Ansprüche 1 bis 5, wobei der Prozessor (106; 106'; 136; 136'; 112; 112') den Abstand wiederholt in Intervallen von kleiner als oder gleich einer (1) Millisekunde bestimmt.

7. Reifenanordnung (T; T') nach einem der Ansprüche 1 bis 6, ferner umfassend eine Vibrationsenergiegewinnungsvorrichtung (186), die betreibbar ist, um kinetische Energie von der Bewegung der Reifenanordnung (T; T') in elektrische Energie umzuwandeln, wobei die Vibrationsenergiegewinnungsvorrichtung (186) mit der Radarquelle (160) kommunikativ gekoppelt und betriebsfähig ist, um daran elektrische Leistung bereitzustellen.

8. Reifenanordnung (T; T') nach Anspruch 7, wobei die elektrische Leistungsquelle (178) wiederaufladbar ist, und die Vibrationsenergiegewinnungsvorrichtung (186) mit der elektrischen Leistungsquelle (178) wirkverbunden ist, um diese mit einer Wiederaufladung mit elektrischer Leistung zu versorgen.

9. Reifenanordnung (T; T') nach einem der Ansprüche 1 bis 8, wobei die elektrische Stromquelle (178) des Sensors (100; 100') eine Hochfrequenzenergiegewinnungsschaltung (182) zum Gewinnen von elektrischer Energie aus Hochfrequenzwellen einschließt, die durch die Antenne (104; 104') empfangen werden.

10. Reifenanordnung (T; T') nach Anspruch 9, wobei die elektrische Leistungsquelle (178) wiederaufladbar ist und die Hochfrequenzenergiegewinnungsschaltung (182) mit der elektrischen Leistungsquelle (178) wirkverbunden ist, um diese mit einer Wiederaufladung mit elektrischer Energie zu versorgen.

11. Reifenanordnung (T; T') nach einem der Ansprüche 1 bis 10, wobei der Prozessor (106; 106'; 136; 136'; 112; 112') betriebsfähig ist, um einen Winkel zwischen der Zielregion (TG) und dem Radarempfänger (170) zu bestimmen, basierend auf einem Ankunftswinkel, zu dem die Radarwellen (RFL), die von der Zielregion (TG) reflektiert werden, an dem Radarempfänger (170) empfangen werden.

12. Reifenanordnung (T; T') nach einem der Ansprüche 1 bis 11, wobei der Prozessor (106; 106') mindestens teilweise innerhalb des ringförmigen Reifenhohlraums (C) eingerichtet ist, und der Sensor (100; 100') den Prozessor (106; 106') einschließt.

13. Reifenanordnung (T; T') nach einem der Ansprüche 1 bis 12, wobei der Prozessor (136; 136'; 112; 112') außerhalb des ringförmigen Reifenhohlraums (C) ist.

14. Reifenanordnung (T; T') nach einem der Ansprüche 1 bis 13, wobei der Prozessor (106; 106'; 136; 136'; 112; 112') ferner betriebsfähig ist, um ein zweidimensionales Bild (CP') zu konstruieren, das eine Reifenaufstandsfläche (CP) des Reifens (TR) darstellt und eine Länge (L), eine Breite (W) und/oder eine Gesamtregion (A) der Reifenaufstandsfläche (CP) von Radarwellen (RFL) des Reifens (TR) innerhalb der Zielregion (TG) abzuleiten.

15. Reifenanordnung (T;T') nach einem der Ansprüche 1 bis 13, wobei der Prozessor (106; 106'; 136; 136'; 112; 112') ferner betriebsfähig ist, um eine Länge (L), eine Breite (W) und/oder eine Gesamtregion (A) einer Reifenaufstandsfläche (CP) von Radarwellen (RFL) des Reifens (TR) innerhalb der Zielregion (TG) direkt abzuleiten.

## Revendications

1. Ensemble pneumatique (T ; T') comprenant :
une jante (R) adaptée pour le déplacement autour d'un axe de rotation (X), ladite jante (R) comportant une paroi de jante ;
un pneu (TR) comportant un corps de pneu (B) avec une région de bande de roulement cylindrique (TD) et des première et deuxième parois latérales espacées axialement (S1, S2), s'étendant radialement vers l'intérieur vers des premier et second talons de montage respectifs (D1, D2) qui définissent au moins partiellement une ouverture centrale (O) dudit corps de pneu (B), ledit corps de pneu (B) comportant une surface interne (ISF), ladite région de bande de roulement cylindrique (TD) comportant une bande de roulement extérieure (TDX) conçue pour rouler le long d'une surface de route associée (RD), et ladite région de bande de roulement cylindrique (TD) conjointement avec lesdites première et seconde parois latérales (S1, S2), définissant au moins partiellement une chambre de pneu annulaire (C) avec une extrémité ouverte en communication avec ladite ouverture centrale (O) dudit corps de pneu (B), ledit pneu (B) étant monté sur ladite paroi de jante (R) de manière à ce qu'au moins une partie de ladite surface interne (ISF) dudit corps de pneu (B) fait face radialement vers l'intérieur en direction d'une partie de ladite paroi de jante ;
une hauteur de pneu et un capteur de surface de contact du pneu (100 ; 100') supportés le long de ladite partie de ladite paroi de jante et disposés au moins partiellement à l'intérieur de ladite chambre de pneu annulaire (C), ledit capteur (100 ; 100') comportant :
une source d'alimentation électrique (178) ;
une source radar (160) couplée en communication avec ladite source d'alimentation électrique (178) et exploitable pour émettre des ondes radar à longueur d'onde millimétrique (EMT) dans ladite chambre de pneu annulaire (C) depuis le long de ladite partie de ladite paroi de jante vers une zone cible (TG) le long de ladite surface interne (ISF) dudit corps de pneu (B) ;
un récepteur radar (170) couplé en communication à ladite source d'alimentation électrique (178) et opérationnel pour recevoir des ondes radar à longueur d'onde millimétrique (RFL) réfléchies par ladite zone cible (TG) le long de ladite surface interne (ISF) dudit corps de pneu (B) et générer un signal ayant une relation avec lesdites ondes radar réfléchies (RFL) et/ou la réception desdites ondes radar réfléchies (RFL) ; et,
une antenne (104 ; 104') couplée en communication avec au moins ledit récepteur radar (170) et exploitable pour transmettre des données, des signaux et/ou des communications ayant ladite relation avec lesdites ondes radar réfléchies (RFL) et/ou la réception desdites ondes radar réfléchies (RFL) à un système associé externe à ladite chambre annulaire de pneu (C) ; et,
un processeur (106 ; 106' ; 136 ; 136' ; 112 ; 112') couplé en communication à au moins l'un parmi ladite source radar (160), ledit récepteur radar (170) et ladite antenne (104 ; 104'), ledit processeur (106 ; 106' ; 136 ; 136' ; 112 ; 112') exploitable pour déterminer une distance entre ladite source radar (160) et ladite zone cible (TG) sur la base d'au moins l'un parmi : (i) un temps de vol requis pour lesdites ondes radar pour passer de ladite source radar (160) à ladite zone cible (TG) et ensuite audit récepteur radar (170) ; (ii) un déphasage de fréquence entre lesdites ondes radar (EMT) transmises par ladite source radar (160) et lesdites ondes radar (RFL) réfléchies à partir de ladite zone cible (TG) et reçues par ledit récepteur radar (170).

2. Ensemble pneumatique (T ; T') selon la revendication 1, dans lequel ledit processeur (106 ; 106' ; 136 ; 136' ; 112 ; 112') est en outre exploitable pour déterminer au moins l'une parmi une vitesse et une accélération de mouvement relatif entre ladite source radar (160) et ladite zone cible (TG) sur la base d'un déphasage de fréquence entre lesdites ondes radar (EMT) transmises par ladite source radar (160) et lesdites ondes radar (RFL) réfléchies à partir de ladite zone cible (TG) et reçues par ledit récepteur radar (170).

3. Ensemble pneumatique (T ; T') selon l'une ou l'autre des revendications 1 et 2, dans lequel ladite source radar (160) est opérationnelle pour émettre au moins l'un parmi : (i) des impulsions individuelles d'ondes radar ; (ii) une onde radar continue qui est modulée en fréquence.

4. Ensemble pneumatique (T ; T') selon l'une quelconque des revendications 1 à 3, dans lequel ladite source radar (160) émet lesdites ondes radar à onde millimétrique (EMT) avec une fréquence supérieure ou égale à 120 gigahertz (GHz) et une longueur d'onde inférieure ou égale à 2,5 millimètres (mm) vers ladite zone cible.

5. Ensemble pneumatique (T ; T') selon l'une quelconque des revendications 1 à 4, dans lequel ledit processeur (106 ; 106' ; 136 ; 136' ; 112 ; 112') détermine ladite distance à une résolution inférieure ou égale à des incréments d'un (1) millimètre.

6. Ensemble pneumatique (T ; T') selon l'une quelconque des revendications 1 à 5, dans lequel ledit processeur (106 ; 106' ; 136 ; 136' ; 112 ; 112') détermine ladite distance de manière répétée à des intervalles inférieurs ou égaux à une (1) milliseconde.

7. Ensemble pneumatique (T ; T') selon l'une quelconque des revendications 1 à 6 comprenant en outre un dispositif de récupération d'énergie de vibration (186) opérationnel pour convertir de l'énergie cinétique d'un mouvement dudit ensemble pneumatique (T ; T') en énergie électrique, ledit dispositif de récupération d'énergie de vibration (186) couplé en communication avec ladite source radar (160) et exploitable pour fournir de l'énergie électrique à celui-ci.

8. Ensemble pneumatique (T ; T') selon la revendication 7, dans lequel ladite source d'alimentation électrique (178) est rechargeable et ledit dispositif de récupération d'énergie de vibration (186) est relié de manière fonctionnelle à ladite source d'alimentation électrique (178) pour fournir une énergie électrique de recharge à celui-ci.

9. Ensemble pneumatique (T ; T') selon l'une quelconque des revendications 1 à 8, dans lequel ladite source d'alimentation électrique (178) dudit capteur (100 ; 100') comporte un circuit de récupération d'énergie par radiofréquence (182) pour récupérer de l'énergie électrique à partir d'ondes radiofréquences reçues par ladite antenne (104 ; 104').

10. Ensemble pneumatique (T ; T') selon la revendication 9, dans lequel ladite source d'alimentation électrique (178) est rechargeable et ledit circuit de récupération d'énergie par radiofréquence (182) est relié de manière fonctionnelle à ladite source d'alimentation électrique (178) pour alimenter celle-ci en énergie électrique de recharge.

11. Ensemble pneumatique (T ; T') selon l'une quelconque des revendications 1 à 10, dans lequel le processeur (106 ; 106' ; 136 ; 136' ; 112 ; 112') est exploitable pour déterminer un angle entre ladite zone cible (TG) et ledit récepteur radar (170) sur la base d'un angle d'arrivée auquel lesdites ondes radar (RFL) réfléchies à partir de ladite zone cible (TG) sont reçues au niveau dudit récepteur radar (170).

12. Ensemble pneumatique (T ; T') selon l'une quelconque des revendications 1 à 11, dans lequel ledit processeur (106 ; 106') disposé au moins partiellement à l'intérieur de ladite chambre de pneu annulaire (C), et ledit capteur (100 ; 100') comporte ledit processeur (106 ; 106').

13. Ensemble pneumatique (T ; T') selon l'une quelconque des revendications 1 à 12, dans lequel ledit processeur (136 ; 136' ; 112 ; 112') est externe à ladite chambre annulaire de pneu (C).

14. Ensemble pneumatique (T ; T') selon l'une quelconque des revendications 1 à 13 dans lequel ledit processeur (106 ; 106' ; 136 ; 136' ; 112 ; 112') est en outre exploitable pour créer une image bidimensionnelle (CP') représentant une aire de contact (CP) dudit pneu (TR) et dériver une longueur (L), une largeur (W) et/ou une zone globale (A) de ladite aire de contact (CP) à partir d'ondes radar (RFL) dudit pneu (TR) au sein de ladite zone cible (TG).

15. Ensemble pneumatique (T ;T') selon l'une quelconque des revendications 1 à 13, dans lequel le processeur (106 ; 106' ; 136 ; 136' ; 112 ; 112') est en outre exploitable pour dériver directement une longueur (L), une largeur (W) et/ou une zone globale (A) d'une aire de contact (CP) à partir d'ondes radar (RFL) dudit pneu (TR) au sein de ladite zone cible (TG).
